# EUROPEAN PATENT APPLICATION

(11) **EP 4 564 475 A1**
(43) Date of publication of application: **04.06.2025**
(21) Application number: 23846307.9
(22) Date of filing: 18.07.2023
(51) Int. Cl.: H01M 4/48, H01M 4/36, H01M 4/38, H01M 10/052, H01M 10/0566

(54) **COMPOSITE PARTICLES FOR NON-AQUEOUS SECONDARY CELL ELECTRODE, NEGATIVE ELECTRODE FOR NON-AQUEOUS SECONDARY CELL, AND NON-AQUEOUS SECONDARY CELL**

(30) Priority: 29.07.2022 JP 2022122284
(71) Applicant: Zeon Corporation, Tokyo 100-8246 (JP)
(72) Inventor: FUJII, Tsutomu, Tokyo 100-8246 (JP); AKABANE, Tetsuya, Tokyo 100-8246 (JP)
(74) Representative: Maiwald GmbH
(86) International application number: PCT/JP2023/026305
(87) International publication number: WO 2024/024576

(57) **Abstract**

Composite particles for a non-aqueous secondary battery electrode contain an electrode active material, a water-soluble polymer, and a binder composition. A particle diameter retention rate of the composite particles expressed by a formula: particle diameter retention rate of composite particles = D50(A) diameter/D50(B) diameter × 100(%) is 70% or more, given that in dry cumulative particle diameter measurement by laser diffraction/scattering, a volume-based median diameter (D50) of the composite particles when dispersing air pressure during measurement is set as 0.25 MPa is taken to be a D50(A) diameter and a volume-based median diameter (D50) of the composite particles when dispersing air pressure during measurement is set as 0.00 MPa is taken to be a D50(B) diameter.

## Description

### TECHNICAL FIELD

The present disclosure relates to composite particles for a non-aqueous secondary battery electrode, a negative electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, studies have been made to improve battery members such as electrodes with the aim of achieving even higher secondary battery performance.

For example, Patent Literature (PTL) 1 proposes a binder composition for a non-aqueous secondary battery electrode containing a particulate polymer having a core-shell structure, wherein a core portion and a shell portion of the particulate polymer include specific monomer units in specific proportions, and the degree of swelling in electrolyte solution of the particulate polymer is not more than a specific value. Moreover, PTL 1 reports that electrical characteristics of a secondary battery can be enhanced by using an electrode that has been produced using this binder composition for a non-aqueous secondary battery electrode.

### CITATION LIST

### Patent Literature

PTL 1: JP7054623B2

### SUMMARY

### (Technical Problem)

Powder forming is known as one method of producing an electrode for a secondary battery. Powder forming is a production method that involves producing composite particles containing an electrode active material, etc., supplying these composite particles onto a current collector, and further roll pressing the composite particles as desired so as to shape the composite particles to form an electrode mixed material layer formed of the composite particles and thereby obtain an electrode for a secondary battery.

With the aim of increasing secondary battery productivity in a secondary battery production method where powder forming is adopted, the inventors decided to focus on the pneumatic conveyance of obtained composite particles through piping that is performed in order to convey the composite particles to a forming/pressing step that constitutes a subsequent step. However, studies conducted by the inventors have revealed that conventional composite particles may undergo fragmentation during pneumatic conveyance. These studies have also revealed that reduction of composite particle fluidity due to the formation of small particles upon fragmentation of composite particles may lead to the occurrence of forming defects such as variation of area density in an obtained electrode mixed material layer and may reduce secondary battery productivity.

Accordingly, one object of the present disclosure is to provide composite particles for a non-aqueous secondary battery electrode with which fragmentation during pneumatic conveyance is inhibited and that can improve non-aqueous secondary battery productivity.

Another object of the present disclosure is to provide a negative electrode for a non-aqueous secondary battery in which presently disclosed composite particles for a non-aqueous secondary battery electrode are used and a non-aqueous secondary battery that includes this negative electrode for a non-aqueous secondary battery.

### (Solution to Problem)

The inventors conducted diligent investigation with the aim of solving the problem set forth above. The inventors made a new discovery that in the case of composite particles that contain an electrode active material, a water-soluble polymer, and a binder composition and that have a particle diameter retention rate of 70% or more as determined by a specific method, these composite particles have excellent strength and can inhibit fragmentation due to pneumatic conveyance. This discovery led to completion of the present disclosure.

Specifically, the present disclosure aims to advantageously solve the problem set forth above, and, according to the present disclosure, composite particles for a non-aqueous secondary battery electrode according to the following [1] to [4], a negative electrode for a non-aqueous secondary battery according to the following [5], and a non-aqueous secondary battery according to the following [6] are provided.
[1] Composite particles for a non-aqueous secondary battery electrode comprising an electrode active material, a water-soluble polymer, and a binder composition, wherein a particle diameter retention rate of the composite particles expressed by a formula shown below: particle diameter retention rate of composite particles = D50(A) diameter/D50(B) diameter × 100(%) is 70% or more, given that in dry cumulative particle diameter measurement by laser diffraction/scattering, a volume-based median diameter (D50) of the composite particles for a non-aqueous secondary battery electrode when dispersing air pressure during measurement is set as 0.25 MPa is taken to be a D50(A) diameter and a volume-based median diameter (D50) of the composite particles for a non-aqueous secondary battery electrode when dispersing air pressure during measurement is set as 0.00 MPa is taken to be a D50(B) diameter.

In the case of composite particles for a non-aqueous secondary battery electrode that contain an electrode active material, a water-soluble polymer, and a binder composition and that have a particle diameter retention rate of 70% or more in this manner, these composite particles for a non-aqueous secondary battery electrode have excellent strength, and fragmentation of the composite particles for a non-aqueous secondary battery electrode due to pneumatic conveyance is inhibited. Consequently, by using the presently disclosed composite particles for a non-aqueous secondary battery electrode, it is possible to improve composite particle fluidity during pneumatic conveyance and to increase non-aqueous secondary battery productivity.

Note that the "D50(A) diameter" and the "D50(B) diameter" referred to in the present disclosure can be measured by a method described in the EXAMPLES section of the present specification.

[2] The composite particles for a non-aqueous secondary battery according to the foregoing [1], wherein the water-soluble polymer includes a carboxyl group.

When the water-soluble polymer includes a carboxyl group in this manner, electrical characteristics of a non-aqueous secondary battery can be improved.

[3] The composite particles for a non-aqueous secondary battery according to the foregoing [1] or [2], wherein the binder composition contains a polymer including an aliphatic conjugated diene monomer unit.

When the binder composition contains a polymer including an aliphatic conjugated diene monomer unit in this manner, electrical characteristics of a non-aqueous secondary battery can be further improved.

[4] The composite particles for a non-aqueous secondary battery according to any one of the foregoing [1] to [3], wherein the electrode active material is a negative electrode active material, and the negative electrode active material includes a silicon-based active material.

When the electrode active material includes a silicon-based negative electrode active material in this manner, the capacity of a non-aqueous secondary battery can be increased.

[5] A negative electrode for a non-aqueous secondary battery comprising an electrode mixed material layer obtained using the composite particles for a non-aqueous secondary battery electrode according to the foregoing [4].

In the case of a negative electrode for a non-aqueous secondary battery including an electrode mixed material layer that is obtained using the composite particles for a non-aqueous secondary battery electrode according to the foregoing [4] in this manner, the occurrence of forming defects such as variation of area density is inhibited. Consequently, by using the electrode for a non-aqueous secondary battery set forth above, it is possible to improve electrical characteristics of a non-aqueous secondary battery.

[6] A non-aqueous secondary battery comprising a positive electrode, a negative electrode, an electrolyte solution, and a separator, wherein the negative electrode is the negative electrode for a non-aqueous secondary battery according to the foregoing [5].

In the case of a non-aqueous secondary battery that includes a positive electrode, a negative electrode, an electrolyte solution, and a separator and in which the negative electrode is the negative electrode for a non-aqueous secondary battery according to the foregoing [5] in this manner, the non-aqueous secondary battery has excellent electrical characteristics.

### (Advantageous Effect)

According to the present disclosure, it is possible to provide composite particles for a non-aqueous secondary battery electrode with which fragmentation during pneumatic conveyance is inhibited and that can improve non-aqueous secondary battery productivity.

Moreover, according to the present disclosure, it is possible to provide a negative electrode for a non-aqueous secondary battery that is obtained using the presently disclosed composite particles for a non-aqueous secondary battery electrode and a non-aqueous secondary battery that includes this negative electrode for a non-aqueous secondary battery.

### DETAILED DESCRIPTION

Embodiments of the present disclosure will be described below.

Presently disclosed composite particles for a non-aqueous secondary battery electrode can be used as a component of an electrode mixed material layer that is included in an electrode of a non-aqueous secondary battery such as a lithium ion secondary battery. Moreover, a presently disclosed negative electrode for a non-aqueous secondary battery is a negative electrode that includes an electrode mixed material layer obtained using the presently disclosed composite particles for a non-aqueous secondary battery electrode. Furthermore, a presently disclosed non-aqueous secondary battery is a non-aqueous secondary battery that includes the presently disclosed negative electrode for a non-aqueous secondary battery.

### (Composite particles for non-aqueous secondary battery electrode)

The presently disclosed composite particles for a non-aqueous secondary battery electrode (hereinafter, also referred to simply as "composite particles") contain an electrode active material, a water-soluble polymer, and a binder composition and may optionally further contain a conductive material. Moreover, a feature of the presently disclosed composite particles is that a particle diameter retention rate of the composite particles expressed by the following formula is 70% or more. Particle diameter retention rate of composite particles = D50(A) diameter/D50(B) diameter × 100(%)

Here, the D50(A) diameter is a volume-based median diameter (D50) of the composite particles when dispersing air pressure during measurement is set as 0.25 MPa in dry cumulative particle diameter measurement by laser diffraction/scattering, and the D50(B) diameter is a volume-based median diameter (D50) of the composite particles when dispersing air pressure during measurement is set as 0.00 MPa in dry cumulative particle diameter measurement by laser diffraction/scattering.

The particle diameter retention rate of the presently disclosed composite particles is 70% or more, preferably 75% or more, and more preferably 80% or more. When the particle diameter retention rate of the composite particles is 70% or more, the composite particles have excellent strength, and fragmentation of the composite particles due to pneumatic conveyance is inhibited. Consequently, by using the presently disclosed composite particles, it is possible to improve composite particle fluidity during pneumatic conveyance and to increase secondary battery productivity.

### <Electrode active material>

Known electrode active materials that are used in secondary batteries can be used without any specific limitations as the electrode active material that is contained in the composite particles. In a case in which the secondary battery is a lithium ion secondary battery, for example, the electrode active material is normally a material that can occlude and release lithium.

Although the following describes, as one example, a case in which the secondary battery is a lithium ion secondary battery, the present disclosure is not limited to the following example.

A negative electrode active material for a lithium ion secondary battery may be a carbon-based active material, a silicon-based active material, a metal-based active material, a negative electrode active material that is a combination thereof, or the like, for example.

### <<Carbon-based active material>>

The term "carbon-based active material" refers to an active material that has carbon as a main framework into which lithium can be inserted (also referred to as "doping"). A material of the carbon-based active material may be a carbonaceous material or a graphitic material, for example.

Examples of the carbonaceous material include graphitizing carbon whose carbon structure can easily be changed according to the heat treatment temperature and non-graphitizing carbon typified by glassy carbon, which has a structure similar to an amorphous structure.

The graphitizing carbon may be a carbon material having tar pitch obtained from petroleum or coal as a raw material, for example. Specific examples of the graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of the graphitic material include graphite such as natural graphite and artificial graphite.

### <<Silicon-based active material>>

The silicon-based active material may be silicon (Si), a silicon-containing alloy, SiO, SiOx, a composite of a Si-containing material and conductive carbon obtained by coating or combining the Si-containing material with the conductive carbon, or the like, for example.

The silicon-containing alloy may be an alloy composition that contains silicon, aluminum, and a transition metal such as iron and that further contains rare earth elements such as tin and yttrium, for example.

SiOx is a compound that includes Si and either or both of SiO and SiO₂, where x is normally not less than 0.01 and less than 2. SiOx can be formed by utilizing a disproportionation reaction of silicon monoxide (SiO), for example. Specifically, SiOx can be prepared by heat-treating SiO, optionally in the presence of a polymer such as polyvinyl alcohol, to produce silicon and silicon dioxide. After SiO has optionally been pulverized and mixed with the polymer, the heat treatment can be performed at a temperature of 900°C or higher, and preferably 1000°C or higher, in an atmosphere containing organic gas and/or vapor.

### <<Metal-based active material>>

The metal-based active material is an active material that contains metal, the structure of which usually contains an element that allows insertion of lithium, and that has a theoretical electric capacity per unit mass of 500 mAh/g or more when lithium is inserted. The metal-based active material may be lithium metal, a simple substance of metal that can form a lithium alloy (for example, Ag, Al, Ba, Bi, Cu, Ga, Ge, In, Ni, P, Pb, Sb, Si, Sn, Sr, Zn, or Ti) or an alloy thereof, or an oxide, a sulfide, a nitride, a silicide, a carbide, or a phosphide of any thereof, for example.

One of the above-described negative electrode active materials may be used individually, or two or more of the above-described negative electrode active materials may be used in combination. Moreover, the negative electrode active material preferably includes a silicon-based active material. By using a negative electrode active material that includes a silicon-based active material, it is possible to increase the capacity of an obtained secondary battery.

In a case in which the negative electrode active material includes a silicon-based active material, the proportion constituted by the silicon-based active material in the negative electrode active material is preferably 3 mass% or more, and more preferably 5 mass% or more. When the proportion constituted by the silicon-based active material in the negative electrode active material is 3 mass% or more, the capacity of an obtained secondary battery can be further increased.

### <Content of electrode active material>

The content of the electrode active material in the composite particles when the total mass of the composite particles is taken to be 100 mass% is preferably 88 mass% or more, more preferably 90 mass% or more, and even more preferably 95 mass% or more, and is preferably 99 mass% or less. When the content of the electrode active material in the composite particles is not less than any of the lower limits set forth above, the capacity of an obtained secondary battery can be further increased. Moreover, when the content of the electrode active material in the composite particles is not more than the upper limit set forth above, binding capacity between the composite particles and a current collector can be improved.

### <Water-soluble polymer>

The water-soluble polymer that is contained in the composite particles is a component that, in conjunction with the binder composition, can hold components contained in the composite particles so that the components are not shed from the composite particles and can cause good binding to a current collector of an electrode mixed material layer that is formed of the composite particles.

When a polymer is referred to as "water-soluble" in the present disclosure, this means that when 0.5 g of the polymer is dissolved in 100 g of water at a temperature of 25°C, insoluble content is less than 1.0 mass%.

### <<Chemical composition of water-soluble polymer>>

The water-soluble polymer may be a cellulosic polymer such as a cellulose compound (carboxymethyl cellulose (CMC), carboxyethyl cellulose, ethyl cellulose, hydroxymethyl cellulose, hydroxypropyl cellulose, carboxyethyl methyl cellulose, etc.) or a salt thereof (ammonium salt, alkali metal salt, etc.); starch oxide or starch phosphate; casein; various types of modified starch; a polyethylene oxide, polyethylene glycol, polyvinyl alcohol, polyvinylpyrrolidone, polysulfonic acid, or polycarboxylic acid; or a (meth)acrylic acid copolymer, (meth)acrylamide polymer, or salt thereof (ammonium salt, alkali metal salt, etc.), for example, without any specific limitations.

One of these water-soluble polymers can be used individually, or two or more of these water-soluble polymers can be used in combination.

Of these examples, a cellulosic polymer, a (meth)acrylic acid copolymer, a (meth)acrylamide polymer, or a combination thereof is preferable as the water-soluble polymer. Note that in the present disclosure, "(meth)acryl" is used to indicate "acryl" and/or "methacryl".

The water-soluble polymer more preferably includes a carboxyl group. When the water-soluble polymer includes a carboxyl group, electrical characteristics of a secondary battery can be improved.

### <Content of water-soluble polymer>

The content of the water-soluble polymer in the composite particles when the total mass of the composite particles is taken to be 100 mass% is preferably 0.5 mass% or more, and is preferably 5 mass% or less, more preferably 4 mass% or less, and even more preferably 3 mass% or less. When the content of the water-soluble polymer in the composite particles is not less than the lower limit set forth above, binding capacity between the composite particles and a current collector can be further improved. Moreover, when the content of the water-soluble polymer in the composite particles is not more than any of the upper limits set forth above, electrical characteristics of a secondary battery can be further improved.

### <Binder composition>

The binder composition is a composition that contains at least a polymer and that may optionally contain other components. The form of the polymer that is contained in the binder composition is preferably a particulate form, but is not specifically limited thereto.

### <<Polymer>>

The polymer that is contained in the binder composition is a component that can hold components contained in the composite particles so that the components are not shed from the composite particles and can cause good binding to a current collector of an electrode mixed material layer that is formed of the composite particles.

No specific limitations are placed on the polymer that is contained in the binder composition so long as it is a polymer having a different chemical composition from the previously described water-soluble polymer, and any polymer such as a conjugated diene polymer or an acrylic polymer, for example, can be used as the polymer. In particular, the polymer that is contained in the binder composition preferably includes an aliphatic conjugated diene monomer unit, and more preferably includes an aromatic vinyl monomer unit and an aliphatic conjugated diene monomer unit as main constitutional units. When the binder composition contains a polymer including an aliphatic conjugated diene monomer unit, electrical characteristics of a secondary battery can be further improved.

The phrase "includes an aromatic vinyl monomer unit and an aliphatic conjugated diene monomer unit as main constitutional units" means that the total content of aromatic vinyl monomer units and aliphatic conjugated diene monomer units in the polymer is more than 50 mass% of all monomer units forming the polymer.

Note that when a polymer is said to "include a monomer unit" in the present disclosure, this means that "a polymer obtained using that monomer includes a repeating unit derived from the monomer".

The proportional contents of monomer units in the polymer can be measured by a nuclear magnetic resonance (NMR) method such as ¹H-NMR.

### -Aromatic vinyl monomer unit-

Examples of aromatic vinyl monomers that can form an aromatic vinyl monomer unit include styrene, α-methylstyrene, p-t-butylstyrene, butoxystyrene, vinylnaphthalene, vinyltoluene, and chlorostyrene. Of these aromatic vinyl monomers, styrene is preferable. One of these aromatic vinyl monomers can be used individually, or two or more of these aromatic vinyl monomers can be used in combination.

The proportional content of aromatic vinyl monomer units in the polymer when the total of all monomer units forming the polymer is taken to be 100 mass% is preferably not less than 20 mass% and not more than 79 mass%.

### -Aliphatic conjugated diene monomer unit-

Examples of conjugated diene monomers that can form an aliphatic conjugated diene monomer unit include 1,3-butadiene, isoprene, 2,3-dimethyl-1,3-butadiene, 2-ethyl-1,3-butadiene, 1,3-pentadiene, 2-chloro-1,3-butadiene, and piperylene. Of these conjugated diene monomers, 1,3-butadiene is preferable. One of these conjugated diene monomers can be used individually, or two or more of these conjugated diene monomers can be used in combination.

The proportional content of aliphatic conjugated diene monomer units in the polymer when the total of all monomer units forming the polymer is taken to be 100 mass% is preferably not less than 20 mass% and not more than 79 mass%.

### -Other monomer units-

The above-described copolymer having an aromatic vinyl monomer unit and an aliphatic conjugated diene monomer unit as main constitutional units may include other monomer units besides an aromatic vinyl monomer unit and an aliphatic conjugated diene monomer unit. Examples of other monomer units include, but are not specifically limited to, an acidic group-containing monomer unit (for example, an unsaturated carboxylic acid monomer unit), a (meth)acrylic acid ester monomer unit, and a nitrile group-containing monomer unit. One of these other monomer units can be used individually, or two or more of these other monomer units can be used in combination.

Note that in the present disclosure, "(meth)acryl" is used to indicate "acryl" and/or "methacryl".

The proportional content of other monomer units in the polymer when the total of all monomer units forming the polymer is taken to be 100 mass% is preferably not less than 1 mass% and not more than 45 mass%.

### =Acidic group-containing monomer unit=

Examples of unsaturated carboxylic acid monomers that can form an unsaturated carboxylic acid monomer unit, which is an example of an acidic group-containing monomer unit, include unsaturated monocarboxylic acids, derivatives of unsaturated monocarboxylic acids, unsaturated dicarboxylic acids, acid anhydrides of unsaturated dicarboxylic acids, and derivatives of unsaturated dicarboxylic acids and acid anhydrides thereof. Examples of unsaturated monocarboxylic acids include acrylic acid, methacrylic acid, and crotonic acid. Examples of derivatives of unsaturated monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid. Examples of unsaturated dicarboxylic acids include maleic acid, fumaric acid, and itaconic acid. Examples of acid anhydrides of unsaturated dicarboxylic acids include maleic anhydride, acrylic anhydride, methylmaleic anhydride, and dimethylmaleic anhydride. Examples of derivatives of unsaturated dicarboxylic acids include methylmaleic acid, dimethylmaleic acid, phenylmaleic acid, chloromaleic acid, dichloromaleic acid, fluoromaleic acid, diphenyl maleate, nonyl maleate, decyl maleate, dodecyl maleate, octadecyl maleate, and fluoroalkyl maleates. One of these unsaturated carboxylic acid monomers can be used individually, or two or more of these unsaturated carboxylic acid monomers can be used in combination.

Of these examples, unsaturated monocarboxylic acids such as acrylic acid and methacrylic acid and unsaturated dicarboxylic acids such as maleic acid, fumaric acid, and itaconic acid are preferable, acrylic acid and itaconic acid are more preferable, and itaconic acid is even more preferable as an unsaturated carboxylic acid monomer.

### =(Meth)acrylic acid ester monomer unit=

Examples of (meth)acrylic acid ester monomers that can form a (meth)acrylic acid ester monomer unit include methyl (meth)acrylate, butyl (meth)acrylate, 2-ethylhexyl (meth)acrylate, and 2-hydroxyethyl acrylate. One of these (meth)acrylic acid ester monomers can be used individually, or two or more of these (meth)acrylic acid ester monomers can be used in combination.

### =Nitrile group-containing monomer unit=

Examples of nitrile group-containing monomers that can form a nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Of these nitrile group-containing monomers, (meth)acrylonitrile is preferable. One of these nitrile group-containing monomers may be used individually, or two or more of these nitrile group-containing monomers may be used in combination.

Note that in the present disclosure, "(meth)acrylo" is used to indicate "acrylo" and/or "methacrylo".

### <<Production method of polymer>>

No specific limitations are placed on the method by which the above-described polymer is produced. For example, the polymer can be produced by polymerizing a monomer composition that contains the above-described monomers. The proportional content of each monomer in the monomer composition that is used to produce the polymer can be set in accordance with the proportional content of each repeating unit in the polymer.

The polymerization method is not specifically limited and may be any of solution polymerization, suspension polymerization, bulk polymerization, emulsion polymerization, etc. Moreover, addition polymerization such as ionic polymerization, radical polymerization, or living radical polymerization can be adopted as the polymerization method.

### <<Other components>>

Examples of other components that the binder composition can contain include, but are not specifically limited to, defoamers, preservatives, antioxidants, reinforcing materials, leveling agents, viscosity modifiers, and additives for electrolyte solution. Commonly known examples of such other components can be used without any specific limitations so long as they do not affect battery reactions. Moreover, one of these components can be used individually, or two or more of these components can be used in combination.

### <Content of binder composition>

The content of the binder composition in the composite particles when the total mass of the composite particles is taken to be 100 mass% is preferably 0.1 mass% or more, and is preferably 5 mass% or less, more preferably 4 mass% or less, and even more preferably 3 mass% or less. When the content of the binder composition in the composite particles is not less than the lower limit set forth above, binding capacity between the composite particles and a current collector can be further increased. Moreover, when the content of the binder composition in the composite particles is not more than any of the upper limits set forth above, electrical characteristics of a secondary battery can be further improved.

### <Conductive material>

The presently disclosed composite particles may optionally further contain a conductive material as previously described. Note that the conductive material that can be contained in the presently disclosed composite particles is a material for promoting electrical contact among the electrode active material. Conductive carbon materials such as carbon black (for example, acetylene black, Ketjenblack^{®} (Ketjenblack is a registered trademark in Japan, other countries, or both), and furnace black), graphite, carbon fiber, and carbon flake; and fibers, foils, and like of various metals can be used as the conductive material. In particular, it is preferable that carbon fiber is included as the conductive material, more preferable that ultra-short carbon fiber such as carbon nanotubes or vapor-grown carbon fiber is included as the conductive material, even more preferable that carbon nanotubes are included as the conductive material, and particularly preferable that single-walled carbon nanotubes are included as the conductive material. One of these conductive materials can be used individually, or two or more of these conductive materials can be used in combination.

### <Content of conductive material>

The content of the conductive material in the composite particles when the total mass of the composite particles is taken to be 100 mass% is preferably 0.01 mass% or more, and is preferably 3 mass% or less, more preferably 2 mass% or less, and even more preferably 1 mass% or less. When the content of the conductive material in the composite particles is within any of the ranges set forth above, electrical contact among the electrode active material can be further promoted.

### (Production method of composite particles for non-aqueous secondary battery electrode)

Although no specific limitations are placed on the method by which the presently disclosed composite particles are produced, the method may, for example, include a step of spray drying a slurry composition that contains at least an electrode active material, a water-soluble polymer, a binder composition, and a solvent and that further contains a conductive material as necessary (spray drying step), and can optionally further include other steps such as a step of classifying the obtained composite particles (classification step). The following describes each step.

### <Spray drying step>

In the spray drying step, the slurry composition is spray dried to obtain composite particles. The spraying step is a method that involves spraying and drying the slurry composition in hot air to obtain a granulated product.

The hot air temperature during spray drying is preferably 25°C to 250°C, more preferably 50°C to 220°C, and even more preferably 80°C to 200°C. No specific limitations are placed on the method by which hot air is blown in the spray drying. For example, a method in which hot air and the spraying direction both flow in a lateral direction, a method in which the slurry composition is sprayed from the top of a drying column and descends together with hot air, a method utilizing counter current contact between sprayed droplets and hot air, a method in which sprayed droplets initially flow together with hot air but subsequently drop under the influence of gravity to cause counter current contact, or the like may be adopted.

No limitations are placed on the temperature of the sprayed slurry composition. The slurry composition may be at room temperature or may be heated to a temperature higher than room temperature.

The spray drying can be performed using a commonly known spray dryer.

An atomizer or the like may be used without any specific limitations as a device for spraying the slurry composition. The atomizer may be a device of a rotating disk-type, a cup-type, a two-fluid nozzle-type, a pressurizing-type, or the like.

### <<Slurry composition>>

The slurry composition that is used in the spray drying step contains an electrode active material, a water-soluble polymer, a binder composition, and a solvent, and can further contain other components and a conductive material as necessary. Note that the electrode active material, the water-soluble polymer, the binder composition, the other components, and the conductive material can be any of those that were previously described in the section relating to the "presently disclosed composite particles for a non-aqueous secondary battery electrode".

The solvent that is used in the slurry composition can be water or an organic solvent without any specific limitations. The organic solvent may be acetonitrile, N-methyl-2-pyrrolidone, tetrahydrofuran, acetone, acetylpyridine, cyclopentanone, dimethylformamide, dimethyl sulfoxide, methylformamide, methyl ethyl ketone, furfural, ethylenediamine, dimethylbenzene (xylene), methylbenzene (toluene), cyclopentyl methyl ether, isopropyl alcohol, or the like, for example. Of these solvents, water is preferable.

Moreover, one of these solvents can be used individually, or two or more of these solvents can be used as a mixture in a freely selected mixing ratio.

### <<Production method of slurry composition>>

No specific limitations are placed on the method by which the slurry composition is produced. For example, the slurry composition can be produced by adding the above-described electrode active material, water-soluble polymer, binder composition, and solvent, and the other components and conductive material that are used as necessary, into the solvent and mixing these materials.

From a viewpoint of further increasing the strength of the obtained composite particles and improving the yield of the composite particles, the production method of the slurry composition preferably includes a hard kneading step. Note that the term "hard kneading" as used in the present disclosure refers to the mixing of components in a state having a higher solid content concentration than the slurry composition that is ultimately obtained.

Specifically, the production method of the slurry composition can, for example, include a hard kneading step of mixing an electrode active material, a water-soluble polymer, and optionally other components and a conductive material and a production step of further adding a binder composition to a mixture obtained through the hard kneading step and performing mixing thereof to produce the slurry composition.

Although no specific limitations are placed on the method by which the components are mixed in the hard kneading step, it is preferable that mixing is performed using a planetary mixer.

The solid content concentration of the mixture obtained through the hard kneading step is preferably 60 mass% or more, more preferably 62 mass% or more, and even more preferably 65 mass% or more, and is preferably 80 mass% or less, more preferably 75 mass% or less, and even more preferably 70 mass% or less.

Although no specific limitations are placed on the method by which the components are mixed in the production step, it is preferable that mixing is performed using a planetary mixer.

The solid content concentration of a mixed liquid that is obtained after the production step (i.e., the slurry composition) is preferably 40 mass% or more, more preferably 42 mass% or more, and even more preferably 44 mass% or more, and is preferably less than 60 mass%.

### <Classification step>

The classification step is a step of classifying composite particles that have been obtained through the spray drying step. The classification method is not specifically limited and may be a dry classification method such as gravitational classification, inertial classification, or centrifugal classification; a wet classification method such as sedimentary classification, mechanical classification, or hydraulic classification; or a sieving classification method using a sieve screen such as a vibrating sieve or an in-plane motion sieve. Of these methods, a sieving classification method is preferable. By performing the classification step, it is easy to obtain the desired composite particles.

### (Negative electrode for non-aqueous secondary battery)

The presently disclosed negative electrode for a non-aqueous secondary battery (hereinafter, also referred to simply as a "negative electrode") includes an electrode mixed material layer. Moreover, the electrode mixed material layer is obtained using the presently disclosed composite particles for a non-aqueous secondary battery electrode set forth above. Consequently, the presently disclosed negative electrode has excellent external appearance as a result of forming defects such as variation of area density being inhibited and can improve electrical characteristics of a secondary battery.

In the presently disclosed negative electrode, the electrode mixed material layer may be provided on a current collector that is included in the electrode, for example. The presently disclosed electrode may include an electrode mixed material layer at just one side of the current collector or may include electrode mixed material layers at both sides of the current collector. Moreover, the presently disclosed negative electrode may include a layer other than the electrode mixed material layer and the current collector (hereinafter, also referred to simply as "another layer") at the surface of the negative electrode (particularly the surface at an electrode mixed material layer-side). Furthermore, the presently disclosed negative electrode may include another layer between the current collector and the electrode mixed material layer.

### <Electrode mixed material layer>

The electrode mixed material layer is obtained using the presently disclosed composite particles as previously described. In other words, the electrode mixed material layer contains the previously described electrode active material, water-soluble polymer, and binder composition and can optionally contain the previously described other components and conductive material.

Note that components contained in the electrode mixed material layer are components that are contained in the presently disclosed composite particles set forth above and that the preferred ratio and attributes of each component in the electrode mixed material layer are the same as the preferred ratio and attributes of each component in the composite particles.

### <Current collector>

A material having electrical conductivity and electrochemical durability can be selected as the current collector according to the type of secondary battery. For example, a current collector that is formed of iron, copper, aluminum, nickel, stainless steel, titanium, tantalum, gold, platinum, or the like can be used as a current collector of a negative electrode for a lithium ion secondary battery. Of these materials, copper foil is particularly preferable as a current collector used for a negative electrode. One of these materials may be used individually, or two or more of these materials may be used in combination in a freely selected ratio.

### <Other layers>

Another layer that is optionally provided at the surface of the electrode (particularly the surface at an electrode mixed material layer-side) may be a known heat-resistant layer that is provided with the aim of improving heat resistance or a known adhesive layer that is provided with the aim of improving adhesiveness with another battery member such as a separator, for example, without any specific limitations.

Moreover, another layer that is optionally provided between the current collector and the electrode mixed material layer may be a known undercoat layer that is provided with the aim of improving adhesiveness between the current collector and the electrode mixed material layer, for example, without any specific limitations.

### (Production method of negative electrode for non-aqueous secondary battery)

The presently disclosed negative electrode that includes an electrode mixed material layer formed of the composite particles set forth above can be produced by forming the presently disclosed composite particles set forth above into the form of a sheet and then stacking this sheet on the current collector, for example, but is not specifically limited to being produced in this manner. Moreover, from a viewpoint of further increasing secondary battery productivity, a method in which the composite particles are subjected to direct pressure forming on the current collector is preferable.

The method of pressure forming may, for example, be a roll pressure forming method in which a roll-type pressure forming device including a pair of rolls is used to feed the current collector by the rolls while the composite particles are supplied to the roll-type pressure forming device by a supply device such as a screw feeder so as to form an electrode mixed material layer on the current collector or may be a method in which the composite particles are scattered onto the current collector, a blade or the like is used to even the composite particles and adjust the thickness, and then forming of the composite particles is performed by a pressing device. Of these methods, the roll pressure forming method is preferable.

### (Non-aqueous secondary battery)

The presently disclosed non-aqueous secondary battery includes a positive electrode, a negative electrode, an electrolyte solution, and a separator, wherein the negative electrode is the presently disclosed negative electrode for a non-aqueous secondary battery set forth above. Consequently, the presently disclosed secondary battery has excellent electrical characteristics.

Although the following describes, as one example, a case in which the non-aqueous secondary battery is a lithium ion secondary battery, the present disclosure is not limited to the following example.

### <Positive electrode>

A known positive electrode can be used as the positive electrode without any specific limitations. Specifically, a positive electrode obtained by forming a positive electrode mixed material layer on a current collector by a known method can be used as the positive electrode.

### <Negative electrode>

The presently disclosed negative electrode for a secondary battery set forth above is used as the negative electrode.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation, and LiPF₆ is particularly preferable. One electrolyte may be used individually, or two or more electrolytes may be used in combination in a freely selected ratio.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used.

The concentration of the electrolyte in the electrolyte solution can be adjusted as appropriate. Known additives such as vinylene carbonate, fluoroethylene carbonate, and ethyl methyl sulfone may be added to the electrolyte solution.

### <Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

### <Production method of lithium ion secondary battery>

The lithium ion secondary battery in accordance with the present disclosure can be produced by, for example, stacking the positive electrode and the negative electrode with the separator in-between, performing rolling, folding, or the like of the resultant laminate, as necessary, in accordance with the battery shape to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like, for example.

### EXAMPLES

The following provides a more specific description of the present disclosure based on examples. However, the present disclosure is not limited to the following examples. In the following description, "%" and "parts" used in expressing quantities are by mass, unless otherwise specified.

### <Particle diameter retention rate of composite particles>

A laser diffraction/scattering particle size analyzer (MT3200II produced by MicrotracBEL Corp.) was used to determine a particle diameter retention rate of composite particles.

Specifically, in dry cumulative particle diameter measurement by laser diffraction/scattering using the above-described laser diffraction/scattering particle size analyzer, the volume-based median diameter (D50) of the composite particles when dispersing air pressure during measurement was set as 0.25 MPa (D50(A) diameter) was determined. In addition, in dry cumulative particle diameter measurement by laser diffraction/scattering using the above-described laser diffraction/scattering particle size analyzer, the volume-based median diameter (D50) of the composite particles when the dispersing air pressure during measurement was set as 0.00 MPa (D50(B) diameter) was determined.

The particle diameter retention rate of the composite particles was then calculated based on the following formula. A value of closer to 100% for the particle diameter retention rate of the composite particles indicates that the composite particles have better strength. Particle diameter retention rate of composite particles = D50(A) diameter/D50(B) diameter × 100(%)

### <Pneumatic conveyance durability of composite particles>

A dense-phase pneumatic conveying system (Plug Master TPM produced by Toyo Hitec Co., Ltd.) was used to pneumatically convey composite particles at an air speed of 8 m/s. In addition, in dry cumulative particle diameter measurement by laser diffraction/scattering using the same laser diffraction/scattering particle size analyzer as used in calculation of the "particle diameter retention rate of composite particles", the volume-based median diameter (D50) of the composite particles when the dispersing air pressure during measurement was set as 0.00 MPa (D50(C) diameter) was determined.

The volume-based D50(B) diameter of the composite particles that was determined in calculation of the "retention rate of composite particles" described above and the volume-based D50(C) diameter of the composite particles described above were used to calculate a particle diameter retention rate of the composite particles between before and after pneumatic conveyance based on the following formula.

Particle diameter retention rate of composite particles between before and after pneumatic conveyance = D50(C) diameter/D50(B) diameter × 100(%)

Moreover, pneumatic conveyance durability of the composite particles was evaluated in accordance with the following standard.

A value of closer to 100% for the particle diameter retention rate of the composite particles between before and after pneumatic conveyance indicates that the composite particles have better pneumatic conveyance durability, and thus indicates that fragmentation of the composite particles during pneumatic conveyance is inhibited.
A: Particle diameter retention rate of composite particles between before and after pneumatic conveyance of 95% or more
B: Particle diameter retention rate of composite particles between before and after pneumatic conveyance of not less than 85% and less than 95%
C: Particle diameter retention rate of composite particles between before and after pneumatic conveyance of less than 85%

### (Example 1)

### <Production of slurry composition for negative electrode>

A planetary mixer equipped with a disper blade (HIVIS DISPER MIX 3D-2 produced by PRIMIX Corporation) was charged with 94.5 parts of artificial graphite, which is a carbon-based active material, and 3.0 parts of SiOx, which is a silicon-based active material, as negative electrode active materials, and 0.5 parts in terms of solid content of a 1% aqueous solution of a sodium salt of carboxymethyl cellulose (CMC-Na) and 0.5 parts in terms of solid content of a 4% aqueous solution of sodium polyacrylate (PAA-NA) as water-soluble polymers. The mixture of these materials was adjusted to a solid content concentration of 65% with deionized water and was subsequently mixed at 25°C for 60 minutes to obtain a mixed liquid (hard kneading step).

Next, 1.5 parts in terms of solid content of a 40% water dispersion of a styrene-butadiene-methacrylic acid copolymer, which is an SBR copolymer, was added as a binder composition to the mixed liquid. Moreover, deionized water was added so as to adjust the final solid content concentration of the mixed liquid to 50%, and then a further 10 minutes of mixing was performed. The mixed liquid was subsequently subjected to defoaming under reduced pressure to obtain a slurry composition for a negative electrode.

### <Production of composite particles for secondary battery electrode>

The obtained slurry composition for a negative electrode was subjected to spray drying using a spray dryer (MOBILE MINOR produced by GEA) under conditions of a rotating disk-type atomizer (diameter: 50 mm), a rotation speed of 25,000 rpm, and a hot air temperature (outlet temperature) of 100°C to produce composite particles (spray drying step). Next, a sieve having a nominal aperture size of 150 µm (JIS Z8801-1) was used to perform classification of the obtained composite particles (classification step) to obtain composite particles for a secondary battery electrode.

The obtained composite particles for a secondary battery electrode were used to measure and evaluate the particle diameter retention rate of the composite particles and the pneumatic conveyance durability of the composite particles. The results are shown in Table 1.

### (Example 2)

A slurry composition for a negative electrode and composite particles for a secondary battery electrode were produced in the same way as in Example 1 with the exception that in production of the slurry composition for a negative electrode, the 1% aqueous solution of a sodium salt of carboxymethyl cellulose (CMC-Na) was not used as a water-soluble polymer, and the 4% aqueous solution of sodium polyacrylate (PAA-Na) as a water-soluble polymer was changed to 1.0 parts in terms of solid content. Moreover, the particle diameter retention rate of the composite particles and the pneumatic conveyance durability of the composite particles were measured and evaluated in the same way as in Example 1. The results are shown in Table 1.

### (Example 3)

A slurry composition for a negative electrode and composite particles for a secondary battery electrode were produced in the same way as in Example 1 with the exception that in production of the slurry composition for a negative electrode, 1.0 parts in terms of solid content of a 4% aqueous solution of a lithium salt of an acrylic acid-acrylamide copolymer (P(AA-Aam)-Li) was used instead of the 1% aqueous solution of a sodium salt of carboxymethyl cellulose (CMC-Na) and the 4% aqueous solution of sodium polyacrylate (PAA-Na) as a water-soluble polymer. Moreover, the particle diameter retention rate of the composite particles and the pneumatic conveyance durability of the composite particles were measured and evaluated in the same way as in Example 1. The results are shown in Table 1.

### (Example 4)

A slurry composition for a negative electrode and composite particles for a secondary battery electrode were produced in the same way as in Example 1 with the exception that in production of the slurry composition for a negative electrode, artificial graphite as a carbon-based active material was changed from 94.5 parts to 97.5 parts, SiOx was not used as a silicon-based active material, the 1% aqueous solution of a sodium salt of carboxymethyl cellulose (CMC-Na) as a water-soluble polymer was changed from 0.5 parts to 1.0 parts in terms of solid content, and the 4% aqueous solution of sodium polyacrylate (PAA-Na) was not used as a water-soluble polymer. Moreover, the particle diameter retention rate of the composite particles and the pneumatic conveyance durability of the composite particles were measured and evaluated in the same way as in Example 1. The results are shown in Table 1.

### (Comparative Example 1)

A slurry composition for a negative electrode and composite particles for a secondary battery electrode were produced in the same way as in Example 1 with the exception that the slurry composition for a negative electrode was produced as described below without performing a hard kneading step in production of the slurry composition for a negative electrode, and that the slurry composition for a negative electrode produced as follows without performing a hard kneading step was used as a slurry composition for a negative electrode in production of the composite particles for a secondary battery electrode. Moreover, the particle diameter retention rate of the composite particles and the pneumatic conveyance durability of the composite particles were measured and evaluated in the same way as in Example 1. The results are shown in Table 1.

### <Production of slurry composition for lithium ion secondary battery negative electrode>

A disper blade (Homo Disper Model 2.5 produced by PRIMIX Corporation) was used to stir 86.25 parts of water while 0.5 parts in terms of solid content of a 1% aqueous solution of a sodium salt of carboxymethyl cellulose (CMC-Na) and 0.5 parts in terms of solid content of a 4% aqueous solution of sodium polyacrylate (PAA-Na) as water-soluble polymers were added thereto. Next, 3.0 parts of SiOx, which is a silicon-based active material, and 94.5 parts of artificial graphite, which is a carbon-based active material, were added as electrode active materials, and finally 1.5 parts in terms of solid content of a 40% water dispersion of a styrene-butadiene-methacrylic acid copolymer was added as a binder composition. The mixture of these materials was mixed at 25°C for 60 minutes, and then a slurry composition for a negative electrode having a solid content concentration of 40% was obtained.

### (Comparative Example 2)

A slurry composition for a negative electrode and composite particles for a secondary battery electrode were produced in the same way as in Comparative Example 1 with the exception that in production of the slurry composition for a negative electrode, 1.0 parts in terms of solid content of a 4% aqueous solution of a lithium salt of an acrylic acid-acrylamide copolymer (P(AA-Aam)-Li) was used instead of the 1% aqueous solution of a sodium salt of carboxymethyl cellulose (CMC-Na) and the 4% aqueous solution of sodium polyacrylate (PAA-Na) as a water-soluble polymer. Moreover, the particle diameter retention rate of the composite particles and the pneumatic conveyance durability of the composite particles were measured and evaluated in the same way as in Example 1. The results are shown in Table 1.

### (Comparative Example 3)

A slurry composition for a negative electrode and composite particles for a secondary battery electrode were produced in the same way as in Comparative Example 1 with the exception that in production of the slurry composition for a negative electrode, artificial graphite as a carbon-based active material was changed from 94.5 parts to 97.5 parts, SiOx was not used as a silicon-based active material, the 1% aqueous solution of a sodium salt of carboxymethyl cellulose (CMC-Na) as a water-soluble polymer was changed from 0.5 parts to 1.0 parts in terms of solid content, and the 4% aqueous solution of sodium polyacrylate (PAA-Na) was not used as a water-soluble polymer. Moreover, the particle diameter retention rate of the composite particles and the pneumatic conveyance durability of the composite particles were measured and evaluated in the same way as in Example 1. The results are shown in Table 1.

**[Table 1]**

| | | | Example 1 | Example 2 | Example 3 | Example 4 | Comparative Example 1 | Comparative Example 2 | Comparative Example 3 |
|---|---|---|---|---|---|---|---|---|---|
| Production of slurry composition | Hard kneading step | | Yes | Yes | Yes | Yes | No | No | No |
| Composite particles | Negative electrode active material | Type of carbon-based active material | Artificial graphite | Artificial graphite | Artificial graphite | Artificial graphite | Artificial graphite | Artificial graphite | Artificial graphite |
| | | Amount [mass%] | 94.5 | 94.5 | 94.5 | 97.5 | 94.5 | 94.5 | 97.5 |
| | | Type of silicon-based active material | SiOx | SiOx | SiOx | - | SiOx | SiOx | - |
| | | Amount [mass%] | 3.0 | 3.0 | 3.0 | - | 3.0 | 3.0 | - |
| | Water-soluble polymer | Type | CMC-Na | - | - | CMC-Na | CMC-Na | - | CMC-Na |
| | | Amount [mass%] | 0.5 | - | - | 1.0 | 0.5 | - | 1.0 |
| | | Type | PAA-Na | PAA-Na | - | - | PAA-Na | - | - |
| | | Amount [mass%] | 0.5 | 1.0 | - | - | 0.5 | - | - |
| | | Type | - | - | P(AA-Aam)-Li | - | - | P(AA-Aam)-Li | - |
| | | Amount [mass%] | - | - | 1.0 | - | - | 1.0 | - |
| | Binder composition | Type of polymer | SBR | SBR | SBR | SBR | SBR | SBR | SBR |
| | | Amount [mass%] | 1.5 | 1.5 | 1.5 | 1.5 | 1.5 | 1.5 | 1.5 |
| | Particle diameter retention rate of composite particles [%] | | 82 | 84 | 87 | 73 | 32 | 31 | 46 |
| Evaluation | Pneumatic conveyance durability of composite particles | | A | A | A | B | C | C | C |

In Table 1:
"CMC-Na" indicates sodium salt of carboxymethyl cellulose;
"PAA-Na" indicates sodium polyacrylate; and
"P(AA-Aam)-Li" indicates lithium salt of acrylic acid-acrylamide copolymer.

It can be seen from Table 1 that in the case of composite particles that contain an electrode active material, a water-soluble polymer, and a binder composition and that have a particle diameter retention rate of 70% or more, these composite particles have excellent pneumatic conveyance durability, and fragmentation of the composite particles during pneumatic conveyance is inhibited.

### INDUSTRIAL APPLICABILITY

According to the present disclosure, it is possible to provide composite particles for a non-aqueous secondary battery electrode with which fragmentation during pneumatic conveyance is inhibited and that can improve non-aqueous secondary battery productivity.

Moreover, according to the present disclosure, it is possible to provide a negative electrode for a non-aqueous secondary battery that is obtained using the presently disclosed composite particles for a non-aqueous secondary battery electrode and a non-aqueous secondary battery that includes this negative electrode for a non-aqueous secondary battery.

## Claims

1. Composite particles for a non-aqueous secondary battery electrode comprising an electrode active material, a water-soluble polymer, and a binder composition, wherein a particle diameter retention rate of the composite particles expressed by a formula shown below: particle diameter retention rate of composite particles = D50(A) diameter/D50(B) diameter × 100(%) is 70% or more, given that in dry cumulative particle diameter measurement by laser diffraction/scattering, a volume-based median diameter (D50) of the composite particles for a non-aqueous secondary battery electrode when dispersing air pressure during measurement is set as 0.25 MPa is taken to be a D50(A) diameter and a volume-based median diameter (D50) of the composite particles for a non-aqueous secondary battery electrode when dispersing air pressure during measurement is set as 0.00 MPa is taken to be a D50(B) diameter.

2. The composite particles for a non-aqueous secondary battery electrode according to claim 1, wherein the water-soluble polymer includes a carboxyl group.

3. The composite particles for a non-aqueous secondary battery electrode according to claim 1, wherein the binder composition contains a polymer including an aliphatic conjugated diene monomer unit.

4. The composite particles for a non-aqueous secondary battery electrode according to claim 1, wherein the electrode active material is a negative electrode active material, and the negative electrode active material includes a silicon-based active material.

5. A negative electrode for a non-aqueous secondary battery comprising an electrode mixed material layer obtained using the composite particles for a non-aqueous secondary battery electrode according to claim 4.

6. A non-aqueous secondary battery comprising a positive electrode, a negative electrode, an electrolyte solution, and a separator, wherein the negative electrode is the negative electrode for a non-aqueous secondary battery according to claim 5.
